# EUROPÄISCHE PATENTSCHRIFT

(11) **EP 1 972 840 B1**
(45) Veröffentlichungstag und Bekanntmachung des Hinweises auf die Patenterteilung: **03.11.2010**
(21) Anmeldenummer: 08152353.2
(22) Anmeldetag: 06.03.2008
(51) Int. Cl.: F16K 15/08, F04B 39/10

(54) **Selbsttätiges Saug- und Druckventil**
Self-actuated intake and pressure valve
Soupape d'aspiration et de pression automatique

(30) Priorität: 22.03.2007 AT 4542007
(43) Veröffentlichungstag der Anmeldung: 24.09.2008
(73) Patentinhaber: Hoerbiger Kompressortechnik Holding GmbH, 1220 Wien (AT)
(72) Erfinder: Spiegl, Bernhard, 1230, Wien (AT); Testori, Markus, 2020, Hollabrunn (AT); Steinrück, Peter, 4830, Hallstatt (AT)
(74) Vertreter: Weiss, Christian

(56) Entgegenhaltungen:
- EP-A- 0 572 748
- EP-A- 1 247 982
- FR-A- 383 914
- GB-A- 406 132
- US-A- 1 593 914

## Beschreibung

Die gegenständliche Erfindung betrifft ein selbsttätiges Saug- und Druckventil mit einem Ventilsitz, einem Ventilfänger und einem zwischen Ventilsitz und Ventilfänger hin- und her bewegbaren Dichtelement, wobei im Ventilfänger zumindest eine Ventilfeder in einem Federtopf angeordnet ist und die Ventilfeder das Dichtelement gegen den Ventilsitz belastet.

In Saug- und Druckventilen, wie z.B. Kompressorventilen, wird das Dichtelement oftmals durch im Ventilfänger angeordneten Ventilfedern, meistens Spiralfedern, gegen den Ventilsitz belastet. Solche Saug- und Druckventile sind z.B. aus der US 1 593 914 A, die kegelförmige Sackbohrungen zur Aufnahme der Spiralfedern im Ventilfänger zeigt und aus der EP 572 748 A1, die einen zylindrischen Zentrierungsabschnitt am Boden einer zylindrischen Sackbohrung zur Aufnahme der Spiralfedern zeigt, bekannt. Die US 3 536 094 A zeigt ein solches Saug- und Druckventil mit einzelnen Ringen als Dichtelemente.

Insbesondere die Herstellung von Spiralfedern mit vollkommen gerader Ausrichtung und vollkommen normal zur Achsrichtung der Feder ausgerichtetem Anschliff gestaltet sich aber schwierig. Der Großteil der Spiralfedern weist eine leichte Schiefstellung innerhalb von gegebenen Grenzen auf. Deshalb führt das Zusammendrücken einer Spiralfeder zu einer geringen Kraftkomponente normal zur Deformationsrichtung bzw. wird dadurch die Schiefstellung weiter gefördert. Schiefe Spiralfedern und/oder Kraftkomponenten normal zur Achsrichtung der Spiralfeder unterstützen das Verdrehen des Dichtelementes, z.B. eine Ventilplatte oder eine Anzahl von Ventilringen in Ringventilen. In Ventilen führt außerdem in der Regel eine ungleichförmige Anströmung des Dichtelementes zur unparallelen Bewegung des Dichtelementes und bei Ringventilen zur Ringdrehung. All das führt im Betrieb des Saug- und Druckventils zu einer Auslenkung der Ventilfeder aus der Achsrichtung. Besonders bei Ringventilen kann die Ringdrehung eine starke Auslenkung der Ventilfedern normal zur Achsrichtung verursachen.

Durch eine Auslenkung der Ventilfeder normal zur Achsrichtung kommt es zu einem Kontakt der Ventilfeder, die in der Regel aus Stahl gefertigt ist, mit dem (metallischen) Ventilfänger. Der Kontakt am (metallischen) Ventilfänger führt zum Verschleiß und Beschädigung an der Feder als auch am Ventilfänger selbst und in Folge zu einer reduzierten Lebensdauer von Ventilfeder und/oder des Ventilfängers. Aus diesem Grunde hat man bereits vor Jahren begonnen in Saug- und Druckventilen, insbesondere Kompressorventilen, Federtöpfe im Ventilfänger anzuordnen, in denen die Ventilfedern eingesetzt und geführt werden, um einen Federverschleiß und Verschleiß am Ventilfänger zu vermeiden.

In der FR 383 914 A geht es darum, eine Führung für das Dichtelement zu realisieren, das ohne ortsfeste Führung eingebaut ist. Dazu soll eine Ventilfeder als Führung dienen. Jede Gefahr eines Abwetzens oder Knirschens des Dichtelements soll dabei vermieden werden. Dazu ist eine Feder in ringförmigen Aufnahmen im Fänger und im Dichtelement angeordnet wird und die Aufnahmen sind aufgehend ausgeführt. Die am höchsten belasteten Federenden sind daher im Fänger bzw. Dichtelement gehalten und ein Kontakt der Federmitte mit dem Fänger wird durch die Form der Aufnahmen vermieden.

Federtöpfe werden auch in Ringventilen eingesetzt, um für eine ausreichende Abstützung und Führung der Federn auch bei beengten Einbauverhältnissen Federn mit einem Durchmesser verwenden zu können, der im Wesentlichen der Breite eines Ringes entspricht, wie z.B. der EP 1 247 982 A2 zu entnehmen ist.

Es wurde aber beobachtet, dass es trotz Verwendung von Federtöpfen zu Verschleißproblemen mit den Federn kommen kann. Der Grund dafür liegt darin, dass bei stark impactbeanspruchten Ventilfedern die ersten und letzten Federwindungen aufgrund der Reflexion der Schockwellen um bis zu 2-mal höher beansprucht sind als die Federwindungen im mittleren Bereich. Bei starker Verdrehung des Dichtelementes oder starker Auslenkung der Feder berührt die Feder bei konventionellen Federtöpfen aber die Kante des Federtopfes mit dem am höchsten belasteten Federende. Dabei kommt es entweder zu einer Beschädigung des Federtopfes oder, noch kritischer, zu einem Verschleiß an den kritischen Windungen der Feder oder zu einem Federbruch verursacht durch Bewegungsbehinderung der Feder.

Es ist daher eine Aufgabe der gegenständlichen Erfindung die oben genannten Nachteile herkömmlicher Federtöpfe zu beheben und insbesondere einen Verschleiß der im Federtopf angeordneten Ventilfeder an den Federenden weitestgehend zu reduzieren, um die Lebensdauer insbesondere der Ventilfedern zu erhöhen.

Diese Aufgabe wird erfindungsgemäß dadurch gelöst, dass die Innenkontur des Federtopfes vom Federtopfboden aus kalottenförmig aufgehend ausgeführt ist. Durch die kalottenförmige Innenkontur wird erreicht, dass die Feder im Falle einer Schiefstellung oder Auslenkung der Feder normal zur Achsrichtung keinesfalls mit den Federenden mit den Kanten des Federtopfes in Berührung kommen kann. Stattdessen kontaktieren den Federtopf nur die minderbelasteten mittleren Federwindungen der Ventilfeder. Zusätzlich kann aufgrund der sanfteren und größeren Kontaktfläche der Ventilfeder mit dem Federtopf auf weichere Federtopf-Werkstoffe mit höherer Schadenstoleranz oder tribologisch optimierte Werkstoffe, z.B. auf PFTE-Basis, ausgewichen werden.

Wie Versuche gezeigt haben, bietet die erfindungsgemäße Ausführung selbst unter Extrembedingungen, z.B. auch mit korrosiven Partikeln im Gas, signifikant höheres Lebensdauerpotential, da der Verschleiß nur an unkritischen Federbereichen auftritt.

Vorteilhaft weist die Innenkontur im Bereich des Federtopfbodens eine kleinere Krümmung auf als im Bereich der Federtopföffnung, wodurch die Kontaktfläche der Ventilfeder mit dem Federtopf weiter erhöht werden kann.

Die Ventilfeder kann sehr einfach im Federtopf zentriert und gehalten werden, wenn im Bereich des Federtopfbodens ein Innenkonturabschnitt vorgesehen ist, der mit derselben Kontur wie die Außenkontur der Einhüllenden der Ventilfeder ausgeführt ist.

Um eine Berührung der Ventilfeder mit dem Federtopf bei keiner oder einer nur geringen Auslenkung zu vermeiden, kann vorteilhaft vorgesehen sein, die Innenkontur des kalottenförmigen Abschnittes größer als die Außenkontur der Einhüllenden der Ventilfeder auszuführen.

Zwischen Innenkonturabschnitt und kalottenförmigen Abschnitt wird dabei vorteilhaft ein Übergang vorgesehen.

Besonders einfach lässt sich der Federtopf für eine Spiralfeder als Ventilfeder fertigen, da die Innenkontur dann rotationssymmetrisch und der Innenkonturabschnitt zylindrisch ist.

Die gegenständliche Erfindung wird im Nachfolgenden anhand der schematischen, nicht einschränkenden Figuren 1 bis 3, die bevorzugte Ausgestaltungen zeigen, beschrieben. Dabei zeigt
Fig. 1 und 2 je einen Schnitt durch ein erfindungsgemäßes Saug- und Druckventil und
Fig. 3 eine vergrößerte Darstellung eines Federtopfes mit einer Ventilfeder.

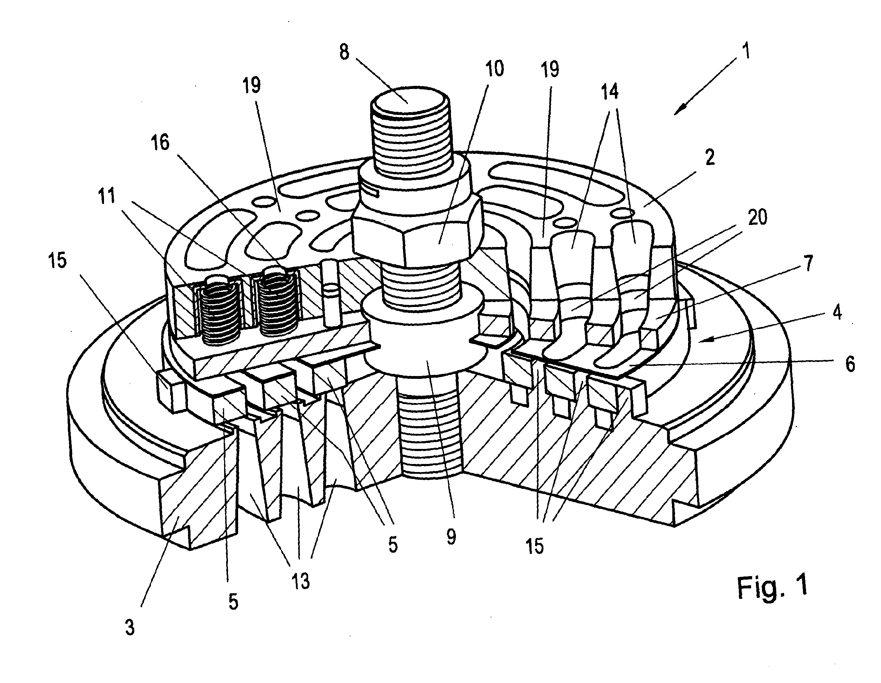

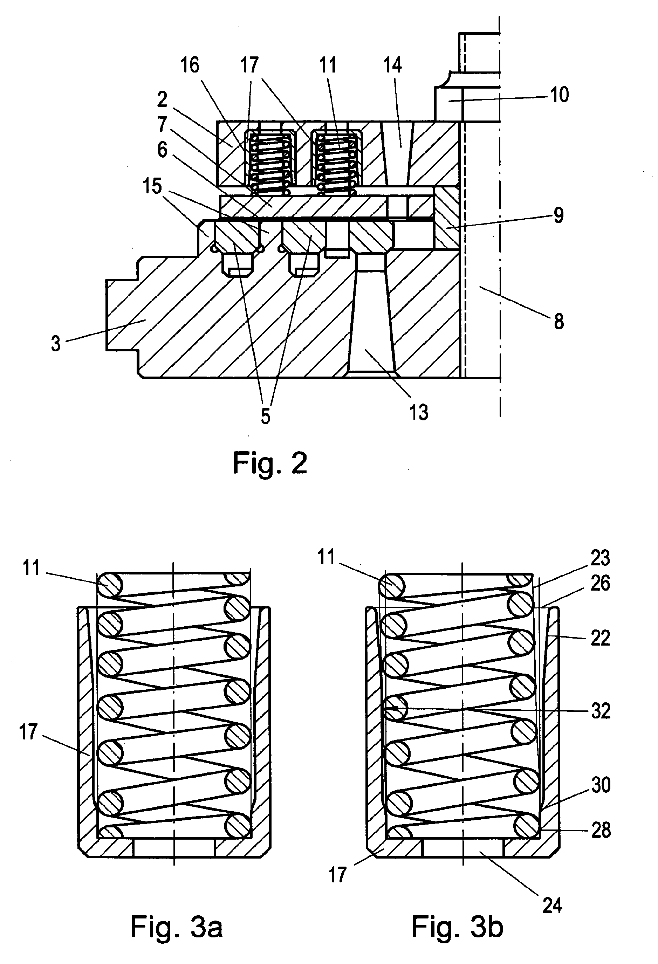

Der grundsätzliche Aufbau eines Saug- und Druckventils 1 ist hinlänglich bekannt, weshalb hier nur kurz unter Bezugnahme auf Fig. 1 und 2 anhand eines darin dargestellten Ringventils darauf eingegangen wird. Ein Ringventil 1, z.B. für den Einsatz in Verdichtern, besteht aus einem Ventilsitz 3 und einem Ventilfänger 2. Dazwischen ist ein Dichtelement 4 angeordnet, das zwischen Ventilsitz 3 und Ventilfänger 2 hin- und herbewegt wird und im Zusammenwirken mit dem Ventilsitz 3 die Dichtungsfunktion übernimmt, indem es den Strömungsquerschnitt durch das Ringventil 1 verschließt und freigibt. Die einzelnen Teile des Ringventils 1 werden durch einen durchgehenden Bolzen 8 und einer Mutter 10 zusammengehalten. Der Abstand zwischen Ventilsitz 3 und Ventilfänger 2, und somit der mögliche Ventilhub, wird durch eine Distanzscheibe 9 oder einen axialen Vorsprung am Ventilfänger 2 oder am Ventilsitz 3 eingestellt. Im Ventilsitz 3 sind ringförmige Durchgangskanäle 13 und im Ventilfänger 2 ringförmige Abströmkanäle 14 angeordnet. Die ringförmigen Kanäle 13, 14 sind wie bekannt eigentlich Kreisringabschnitte, die durch Radialstege 19 unterbrochen werden.

Das Dichtelement 4 umfasst hier konzentrisch angeordnete Dichtringe 5, die mit den Ventilsitz 3 zusammenwirken. Dazu sind an den Dichtringen 5 und am Ventilsitz 3 jeweils zugeordnete und zusammenwirkende Dichtflächen angeordnet.

Am Ventilsitz 3 sind über den Umfang verteilt und in unterschiedlichen radialen Abständen eine Anzahl von vom Ventilsitz 3 axial in Richtung der Dichtringe 5 abstehende Ringführungsnasen 15 angeordnet, zwischen denen die einzelnen Dichtringe 5 sowohl in radialer als auch in axialer Richtung geführt angeordnet sind. Die Ringführungsnasen 15 stehen dabei axial zumindest soweit aus dem Ventilsitz 3 heraus, dass die Dichtringe 5 während der gesamten Ringöffnungsbewegung geführt bleiben. Eine Ringführungsnase 15 ist dabei in radialer Richtung zwischen zwei Dichtflächen 17 des Ventilsitzes 3 angeordnet.

Das Dichtelement 4 kann weiters eine Synchronplatte 7, die an den dem Ventilsitz 3 gegenüberliegenden Seiten der Dichtringe 5 angeordnet ist, und eine zwischen Synchronplatte 7 und Dichtringe 5 liegende Trennplatte 6 umfassen. Die Synchronplatte 7 wird durch eine Reihe von in Federnestern 16 am Ventilfänger 2 angeordneten Ventilfedern 11, hier Spiralfedern, federbelastet, wobei die Ventilfedern 11 in Federtöpfen 17 angeordnet sind. Die Federtöpfe 17 werden dabei vorteilhaft in den Radialstegen 19 des Ventilfängers 2 angeordnet. Die Ventilfedern 11 drücken somit das Dichtelement 4, hier die Dichtringe 5 über die Synchronplatte 7 und die Trennplatte 6, gegen den Ventilsitz 3. Während der Ringöffnungsbewegung werden die Dichtringe 5 durch den anstehenden Gasdruck entgegen der Kraft der Spiralfedern 11 vom Ventilsitz 3 abgehoben. Die Synchronplatte 7, die Trennplatte 6 und die Dichtringe 5 bilden hier das Dichtelement 4 des Ringventils 1.

Selbstverständlich kann das Dichtelement 4 ebenso nur aus Dichtringen 5 oder einer Dichtplatte bestehen. In diesem Fall können die Ventilfedern 11 auch direkt an den Dichtringen 5 oder der Dichtplatte angreifen.

In der Synchronplatte 7 und der Trennplatte 6 sind natürlich wieder eine Reihe von, bevorzugt ringförmigen (eigentlich eine Reihe von Kreisringabschnitten, die durch Radialstege getrennt werden), Durchströmöffnungen 20 angeordnet, damit das gasförmige Medium möglichst verlustlos durch das Ringventil 1 durchtreten kann.

Der Federtopf 17 hat hier, wie in Fig. 3 dargestellt, eine zylindrische Außenkontur und passt somit in eine zylindrische Sackbohrung als Federnest 16. Selbstverständlich kann die Außenkontur auch jede andere geeignete Form aufweisen. Entscheidend ist für die gegenständliche Erfindung die Form der Innenkontur 22.

Die Innenkontur 22 des Federtopfes 17 geht dabei vom Bereich des Federtopfbodens 24 kalottenförmig auf. Die Innenkontur 22 folgt somit einer Kurve, die im Bereich des Federtopfbodens 24 eine geringe Krümmung aufweist (also sehr flach ist) und die Krümmung zur Federtopföffnung 26 hin verlaufend zunimmt. Die Innenkontur 22 ist dabei nach außen gekrümmt. Im Bereich der Federtopföffnung 26 kann für einen sauberen Übergang zur Stirnfläche des Federtopfes 17 auch eine Abrundung nach außen vorgesehen sein. Durch die Krümmung nach außen ist die Innenkontur 22 des Federtopfes 17 größer als die Außenkontur 23 der Einhüllenden der Ventilfeder 11. Damit kann sich die Ventilfeder 11 auch in gewissen Grenzen normal zur Achsrichtung des Federtopfes 17 bewegen.

Für eine Spiralfeder als Ventilfeder 11 ist die Innenkontur natürlich rotationssymmetrisch um die Achsrichtung des Federtopfes 17 und der Innendurchmesser des Federtopfes 17 nimmt vom Federtopfboden 24 zur Federtopföffnung 26 hin zu.

Im Bereich des Federtopfbodens 24 kann ein Innenkonturabschnitt 28 vorgesehen sein, wie in Fig. 3 dargestellt, dessen Kontur der Außenkontur 23 der Einhüllenden der Ventilfeder 11 entspricht. Ebenso kann in diesem Bereich eine leichte Presspassung vorgesehen sein. Für eine in Fig. 3 dargestellte Spiralfeder als Ventilfeder 11 wäre dieser Innenkonturabschnitt 28 natürlich zylindrisch. Dabei kann auch ein Übergang 30 von diesem Innenkonturabschnitt 28 zur kalottenförmigen Innenkontur 22 des Federtopfes 17, die größer ist als die Außenkontur 23 der Einhüllenden der Ventilfeder 11, vorgesehen sein. In diesem Innenkonturabschnitt 28 kann die Ventilfeder 11 bei der Montage gesteckt und im Bereich des Federtopfbodens 24 zentriert und gehalten werden. Die kalottenförmige Innenkontur 22 kann aber auch von ganz unten im Federtopfboden 24 ausgehen.

Fig. 3a zeigt die Ventilfeder 11, hier eine Spiralfeder, unausgelenkt. In dieser Lage ist die Ventilfeder allseitig vom Federtopf 17 beabstandet. Wird die Ventilfeder 11 nun normal zur Achsrichtung ausgelenkt oder steht die Ventilfeder 11 schief, so kontaktiert die Ventilfeder 11 den Federtopf 17 durch die kalottenförmige Innenkontur 22 lediglich im mittleren Bereich 32 der Ventilfeder 11 und nicht an den Ventilfederenden an den Kanten des Federtopfes 17, wie in Fig. 3b dargestellt. Damit wird vermieden, dass die hoch belasteten Ventilfederenden den Federtopf 17 berühren.

Die kalottenförmige Kurve der Innenkontur 22 könnte natürlich äquivalent auch durch einen Polygonzug angenähert werden.

## Patentansprüche

1. Selbsttätiges Saug- und Druckventil mit einem Ventilsitz (3), einem Ventilfänger (2) und einem zwischen Ventilsitz (3) und Ventilfänger (2) hin- und her bewegbaren Dichtelement (4), wobei im Ventilfänger (2) zumindest ein Federtopf (17) angeordnet ist, in dem eine Ventilfeder (11) angeordnet ist und die Ventilfeder (11) das Dichtelement (4) gegen den Ventilsitz (3) belastet, **dadurch gekennzeichnet, dass** die Innenkontur (22) des Federtopfes (17) vom Federtopfboden (24) aus kalottenförmig aufgehend ausgeführt ist, um eine Berührung des Ventilfederendes mit dem Federtopf (17) zu verhindern.

2. Selbsttätiges Saug- und Druckventil nach Anspruch 1, **dadurch gekennzeichnet, dass** die Innenkontur (22) im Bereich des Federtopfbodens (24) eine kleinere Krümmung aufweist als im Bereich der Federtopföffnung (26).

3. Selbsttätiges Saug- und Druckventil nach Anspruch 1 oder 2, **dadurch gekennzeichnet, dass** im Bereich des Federtopfbodens (24) ein Innenkonturabschnitt (28) vorgesehen ist, der mit derselben Kontur wie die Außenkontur der Einhüllenden (23) der Ventilfeder (11) ausgeführt ist.

4. Selbsttätiges Saug- und Druckventil nach einem der Ansprüche 1 bis 3, **dadurch gekennzeichnet, dass** die Innenkontur (22) des kalottenförmigen Abschnittes größer ist als die Außenkontur der Einhüllenden (23) der Ventilfeder (11).

5. Selbsttätiges Saug- und Druckventil nach Anspruch 3 oder 4, **dadurch gekennzeichnet, dass** vom Innenkonturabschnitt (28) zum kalottenförmigen Abschnitt ein Übergang vorgesehen ist.

6. Selbsttätiges Saug- und Druckventil nach einem der Ansprüche 1 bis 5, **dadurch gekennzeichnet, dass** die Ventilfeder (11) als Spiralfeder ausgeführt ist und die Innenkontur (22) rotationssymmetrisch ist.

7. Selbsttätiges Saug- und Druckventil nach Anspruch 6, **dadurch gekennzeichnet, dass** der Innenkonturabschnitt (28) zylindrisch ist.

8. Selbsttätiges Saug- und Druckventil nach Anspruch 6 oder 7, **dadurch gekennzeichnet, dass** der Innendurchmesser des kalottenförmigen Abschnittes größer ist als Außendurchmesser der Spiralfeder (11).

## Claims

1. Automatic suction and pressure valve with a valve seat (3), a valve stop (2) and a sealing element (4) that can move to and fro between the valve seat (3) and the valve stop (2), wherein at least one spring cup (17) is arranged in the valve stop (2), in which spring cup a valve spring (11) is arranged and the valve spring (11) loads the sealing element (4) against the valve seat (3), **characterized in that** the internal contour (22) of the spring cup (17) is designed in the shape of a calotte opening from the spring cup base (24) in order to prevent the end of the valve spring from touching the spring cup (17).

2. Automatic suction and pressure valve according to claim 1, **characterized in that** the internal contour (22) in the region of the spring cup base (24) has a smaller curvature than in the region of the spring cup opening (26).

3. Automatic suction and pressure valve according to claim 1 or 2, **characterized in that** an internal contour section (28) is provided in the region of the spring cup base (24), which internal contour section is embodied with the same contour as the external contour of the envelope (23) of the valve spring (11).

4. Automatic suction and pressure valve according to one of claims 1 through 3, **characterized in that** the internal contour (22) of the calotte-shaped section is greater than the external contour of the envelope (23) of the valve spring (11).

5. Automatic suction and pressure valve according to claim 3 or 4, **characterized in that** a transition is provided from the internal contour section (28) to the calotte-shaped section.

6. Automatic suction and pressure valve according to one of claims 1 through 5, **characterized in that** the valve spring (11) is embodied as a spiral spring and the internal contour (22) is rotationally symmetrical.

7. Automatic suction and pressure valve according to claim 6, **characterized in that** the internal contour section (28) is cylindrical.

8. Automatic suction and pressure valve according to claim 6 or 7, **characterized in that** the internal diameter of the calotte-shaped section is greater than the external diameter of the spiral spring (11).

## Revendications

1. Soupape automatique d'aspiration et de refoulement, avec un siège de soupape (3), une butée de soupape (2) et un élément d'étanchéité (4) apte à effectuer un mouvement de va et vient entre le siège de soupape (3) et la butée de soupape (2), la butée de soupape (2) comprenant au moins une douille de ressort (17) dans laquelle est placé un ressort de soupape (11) et le ressort de soupape (11) appuyant l'élément d'étanchéité (4) contre le siège de soupape (3), **caractérisée en ce que** le contour intérieur (22) de la douille de ressort (17) est configuré en forme de calotte en partant du fond de la douille de ressort (24) afin d'éviter un contact entre l'extrémité du ressort de soupape et la douille de ressort (17).

2. Soupape automatique d'aspiration et de refoulement selon la revendication 1, **caractérisée en ce que** le contour intérieur (22) présente au niveau du fond de la douille de ressort (24) une courbure moindre qu'au niveau de l'ouverture de la douille de ressort (26).

3. Soupape automatique d'aspiration et de refoulement selon la revendication 1 ou 2, **caractérisée en ce qu'**il est prévu au niveau du fond de la douille de ressort (24) une section de contour intérieur (28) qui est réalisée avec le même contour que le contour extérieur de l'enveloppe (23) du ressort de soupape (11).

4. Soupape automatique d'aspiration et de refoulement selon l'une des revendications 1 à 3, **caractérisée en ce que** le contour intérieur (22) de la section en forme de calotte est plus grand que le contour extérieur de l'enveloppe (23) du ressort de soupape (11).

5. Soupape automatique d'aspiration et de refoulement selon la revendication 3 ou 4, **caractérisée en ce qu'**il est prévu une transition entre la section de contour intérieur (28) et la section en forme de calotte.

6. Soupape automatique d'aspiration et de refoulement selon l'une des revendications 1 à 5, **caractérisée en ce que** le ressort de soupape (11) prend la forme d'un ressort hélicoïdal et le contour intérieur (22) est symétrique en rotation.

7. Soupape automatique d'aspiration et de refoulement selon la revendication 6, **caractérisée en ce que** la section de contour intérieur (28) est cylindrique.

8. Soupape automatique d'aspiration et de refoulement selon la revendication 6 ou 7, **caractérisée en ce que** le diamètre intérieur de la section en forme de calotte est supérieur au diamètre extérieur du ressort hélicoïdal (11).
